Europäisches Patentamt

European Patent Office

Office européen des brevets

(19)

(11) **EP 1 491 853 A2**

(12) **EUROPÄISCHE PATENTANMELDUNG**

(43) Veröffentlichungstag:
**29.12.2004 Patentblatt 2004/53**

(51) Int Cl.7: **G01C 3/08**

(21) Anmeldenummer: **04014296.0**

(22) Anmeldetag: **18.06.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **27.06.2003 DE 10329043**

(71) Anmelder: **Leuze electronic GmbH + Co KG
73277 Owen/Teck (DE)**

(72) Erfinder:
• **Wörner, Jörg
73235 Weilheim/Teck (DE)**
• **Wolf, Tilo
73240 Wendlingen (DE)**

(74) Vertreter: **Ruckh, Rainer Gerhard, Dr.
Fabrikstrasse 18
73277 Owen/Teck (DE)**

(54) **Vorrichtung zur Bestimmung von Distanzen**

(57) Die Erfindung betrifft eine Vorrichtung (1) zur Bestimmung von Distanzen von Objekten innerhalb eines Überwachungsbereichs mit einem Distanzsensor (2) und einer an diesen anschließbaren Anschalteinheit (5). Die Anschalteinheit (5) weist Mittel zur Bestimmung und / oder Speicherung von Parameterwerten aufweist, welche in den angeschlossenen Distanzsensor (2) zu dessen Betrieb einlesbar sind.

**Fig. 1**

**Beschreibung**

Die Erfindung betrifft eine Vorrichtung zur Bestimmung von Distanzen von Objekten.

Derartige Vorrichtungen bestehen im Wesentlichen aus einem Distanzsensor, mittels dessen Objektdistanzen innerhalb eines vorgegebenen Überwachungsbereichs erfassbar sind. Diese Distanzsensoren bestehen im Wesentlichen aus einem Sendelichtstrahlen emittierenden Sender, einem Empfangslichtstrahlen empfangenden Empfänger sowie einer Auswerteeinheit, in welcher die im Empfänger generierten Empfangssignale zur Bestimmung der Objektdistanzen ausgewertet werden.

Die Distanzbestimmung im Distanzsensor kann insbesondere nach dem Laufzeitverfahren, Phasenmessverfahren oder nach dem Triangulationsverfahren erfolgen.

Derartige Distanzsensoren werden in unterschiedlichen industriellen Applikationen eingesetzt, wobei eine wesentliche Anforderung bei derartigen Anwendungen eine reproduzierbare und möglichst genaue Bestimmung der Distanzen von Objekten ist.

Ein Beispiel hierfür ist die Überwachung der Annäherung eines Fahrzeugs an eine stationäre Einheit. Der Distanzsensor ist mittels einer Befestigungsvorrichtung an der stationären Einheit fixiert und dabei derart ausgerichtet, dass die vom Sender des Distanzsensors emittierten Sendelichtstrahlen auf einen Reflektor an einer Frontseite des Fahrzeugs treffen und von dort zurück zum Empfänger des Distanzsensors reflektiert werden.

Mit dem Distanzsensor wird insbesondere überwacht, ob sich das Fahrzeug bis zu einer vorgegebenen Solldistanz der stationären Einheit genähert hat, wobei diese Solldistanz vorzugsweise als Parameter im Distanzsensor abgespeichert ist. Befindet sich das Fahrzeug in der Solldistanz so wird von dem Distanzsensor ein entsprechendes Ausgangssignal ausgegeben, welches beispielsweise von einer Steuerung für Steueraufgaben verwendet wird.

Schwierigkeiten bei derartigen Vorrichtungen treten insbesondere dann auf, wenn aufgrund eines Defektes der Distanzsensor ausfällt und durch einen neuen Distanzsensor ersetzt werden muss. Auch wenn der neue Distanzsensor an derselben Befestigungsvorrichtung in gleicher Weise wie der erste Distanzsensor montiert wird, ist eine durch Montagetoleranzen und interne Bauteiltoleranzen bedingte Verschiebung des Bezugspunktes der Distanzmessung unvermeidlich. Dies führt zwangsläufig zu einer fehlerhaften Bestimmung der Solldistanz des Fahrzeugs. Dieser Fehler muss mit einer aufwendigen mechanischen Nachjustierung des Distanzsensors kompensiert werden, wodurch die Montagezeit des Distanzsensors in unerwünschter Weise erhöht wird.

Der Erfindung liegt die Aufgabe zugrunde, eine Vorrichtung der eingangs genannten Art bereitzustellen, bei welcher eine hohe Verfügbarkeit und Reproduzierbarkeit der Distanzbestimmung von Objekten gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Bestimmung von Distanzen von Objekten innerhalb eines Überwachungsbereichs und weist einen Distanzsensor und eine an diesen anschließbare Anschalteinheit auf, wobei die Anschalteinheit Mittel zur Bestimmung und / oder Speicherung von Parameterwerten aufweist, welche in den angeschlossenen Distanzsensor zu dessen Betrieb einlesbar sind.

Bei der erfindungsgemäßen Vorrichtung können applikationsspezifische Parameterwerte des Distanzsensors, welche zu dessen Betrieb benötigt werden, in der externen Anschalteinheit abgespeichert werden, so dass die dort hinterlegten Parameterwerte bei einem Austausch des Distanzsensors von dem neuen Distanzsensor übernommen werden können. Damit wird vermieden, dass bei einem Defekt des Distanzsensors Parameterwerte und damit insbesondere applikationsspezifische Einstellungen der Vorrichtung verloren gehen. Der neu angeschlossene Distanzsensor ist damit durch die Übernahme der Parameterwerte aus der Anschalteinheit sofort in vollem Umfang funktionsfähig, wodurch die Verfügbarkeit der Vorrichtung erheblich erhöht wird.

Ein wesentlicher Vorteil der erfindungsgemäßen Vorrichtung besteht darin, dass in der Anschalteinheit für die Einstellung und Justage des Distanzsensors relevante Parameterwerte, insbesondere Referenz-Distanzwerte abgespeichert werden können. Diese sind beispielsweise von Nullpunktdistanzwerten gebildet, auf welche die mit dem in einer vorgegebenen Montageposition fixierten Distanzsensor durchgeführten Entfernungsmessungen bezogen werden. Bei einem Austausch des Distanzsensors wird der neue Distanzsensor in derselben Montageposition fixiert. Aufgrund von Montagetoleranzen bei der Fixierung des neuen Distanzsensors in der Montageposition sowie aufgrund von internen Bauteiltoleranzen des Distanzsensors stimmt dessen Bezug auf die Nullpunktdistanz mit dem Bezug des alten Distanzsensors nicht exakt überein. Bei bekannten Distanzsensoren muss daher eine aufwendige mechanische Nachjustierung vorgenommen werden, dass der genaue Bezug auf die Nullpunktdistanz wieder hergestellt wird. Bei der erfindungsgemäßen Vorrichtung entfällt eine derartige Nachjustierung. Die von der Anschalteinheit übernommene Nullpunktdistanz als applikationsspezifischer Parameterwert wird in dem neuen Distanzsensor mit dem dort neu bestimmten Nullpunktdistanzwert verglichen. Aus dem Vergleich des neu ermittelten und abgespeicherten Nullpunktdistanzwert wird dann im neuen Distanzsensor ein Offset-Wert abgeleitet, welcher dann von dem aktuell ermittelten Distanzmesswerten subtrahiert wird.

Durch diese Korrektur der aktuellen Distanzmesswerte mit dem Offset-Wert werden die durch die Montage- und Bauteiltoleranzen entstandenen Meßwertfehler kompensiert.

Gemäß einer weiteren Variante der Erfindung weist die Anschalteinheit Sensoren zur Bestimmung von Umweltparamtern auf. Diese Umweltparameter werden während des Betriebs des Distanzsensors in diesen von der Anschalteinheit eingelesen. Anhand der eingelesenen Umweltparameter erfolgt eine fortlaufende Korrektur der ermittelten Distanzmesswerte. Systematische, aufgrund von Umwelteinflüssen entstehende Distanzmessfehler können somit eliminiert werden. Dadurch wird die Messgenauigkeit des Distanzsensors erheblich erhöht.

Die Erfindung wird im Nachstehenden anhand der Zeichnungen erläutert. Es zeigen:

Figur 1: Schematische Darstellung eines Ausführungsbeispiels einer Vorrichtung zur Bestimmung von Distanzen von Objekten.

Figur 2: Schematische Darstellung des Aufbaus eines Distanzsensors und einer diesem zugeordneten Anschalteinheit als Komponenten der Vorrichtung gemäß Figur 1.

Figur 3: Verlauf des Schaltsignals an einem Schaltausgang des Distanzsensors gemäß Figur 2 in Abhängigkeit der Objektdistanz.

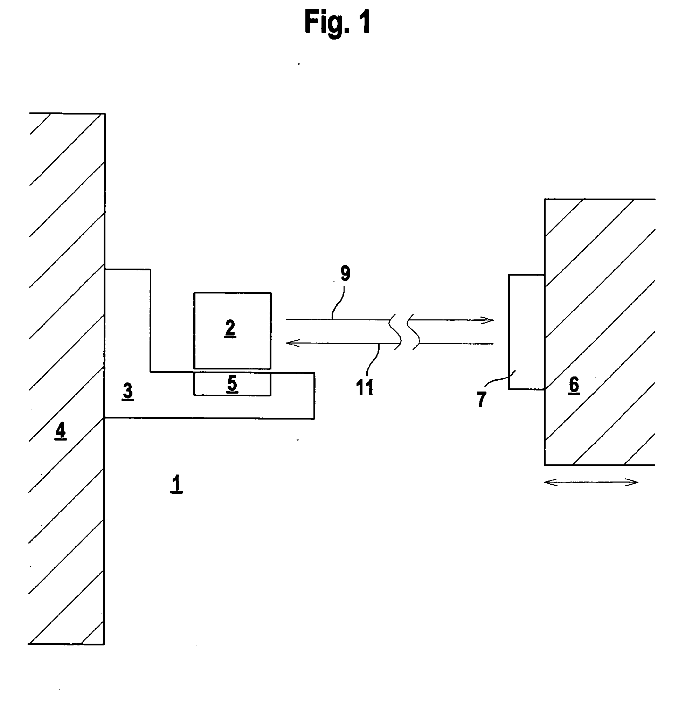

Figur 1 zeigt ein Ausführungsbeispiel einer Vorrichtung 1 zur Bestimmung von Distanzen innerhalb eines Überwachungsbereichs.

Die Vorrichtung 1 weist einen Distanzsensor 2 auf, der mittels einer Befestigungsvorrichtung 3 an einer stationären Einheit 4 montiert ist. Die Befestigungsvorrichtung 3 weist die Form eines Haltewinkels auf, der an einer vertikalen Wand der stationären Einheit befestigt ist. Der Distanzsensor 2 sitzt auf der Oberseite des Haltewinkels auf. Zur Justage des Distanzsensors 2 kann der Haltewinkel vorzugsweise in allen drei Raumrichtungen an der Wand der stationären Einheit verstellt werden.

In der Befestigungsvorrichtung 3 ist eine Anschalteinheit 5 integriert. Der an der Befestigungsvorrichtung 3 fixierte Distanzsensor 2 ist an die Anschalteinheit 5 angeschlossen. Aus dem Distanzsensor 2 können so Parameterwerte in die Anschalteinheit 5 eingelesen und dort abgespeichert werden. Die Anschalteinheit 5 ist im vorliegenden Fall in einer Ausnehmung im Boden des Haltewinkels gelagert, so dass der Distanzsensors 2 auf die freie Oberseite der Anschalteinheit 5 aufsetzbar ist. Alternativ kann die Anschalteinheit auch als auf den Distanzsensor 2 aufsetzbarer Aufsatz oder als separate Einheit, die über eine Kabelverbindung mit dem Distanzsensor 2 verbunden ist, ausgebildet sein.

Die Anschalteinheit 5 kann von einer externen Einheit mit einer Versorgungsspannung gespeist werden. Alternativ kann die Spannungsversorgung auch über den angeschlossenen Distanzsensor 2 erfolgen, wobei dann die Versorgungsspannung über die Schnittstelle zwischen Anschalteinheit 5 und Distanzsensor 2 eingespeist wird.

Im vorliegenden Ausführungsbeispiel wird mit dem Distanzsensor 2 die Entfernung eines Fahrzeugs 6 zur stationären Einheit bestimmt. Als Bezugspunkt für die Distanzmessung ist an der Rückseite des Fahrzeugs 6 ein Reflektor 7 angebracht.

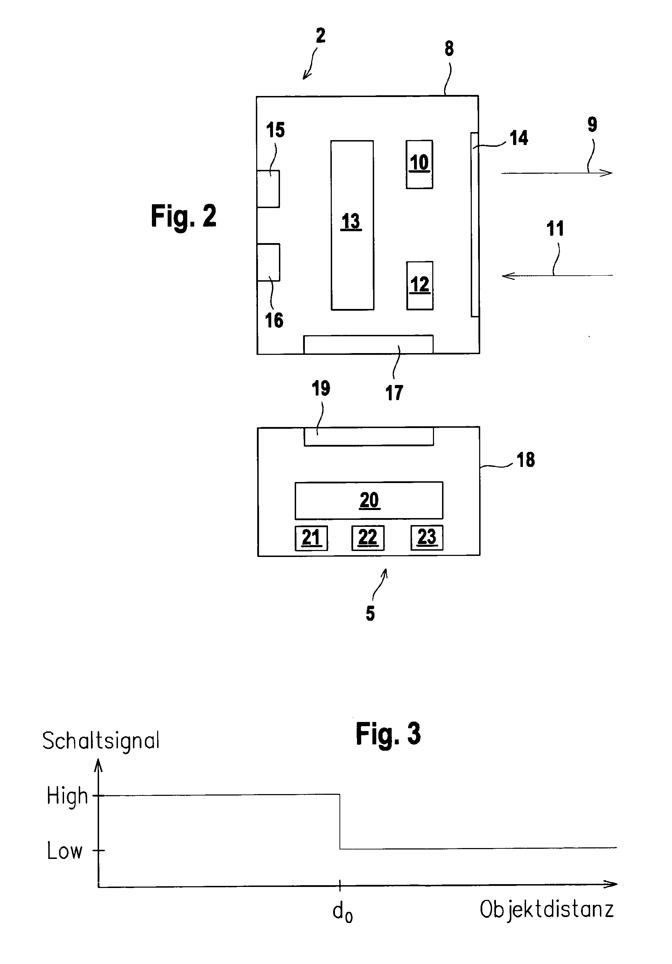

Der Aufbau des Distanzsensors 2 und der Anschalteinheit 5 ist in Figur 2 schematisch dargestellt. Der Distanzsensor 2 ist in einem Gehäuse 8 integriert und weist einen Sendelichtstrahlen 9 emittierenden Sender 10 und einen Empfangslichtstrahlen 11 empfangenden Empfänger 12 auf. Der Sender 10 und der Empfänger 12 sind an eine Auswerteeinheit 13 angeschlossen, die von einem Microcontroller oder dergleichen gebildet ist. Über die Auswerteeinheit 13 erfolgt die Ansteuerung des Senders 10. Zudem werden in der Auswerteeinheit 13 die am Ausgang des Empfängers 12 anstehenden Empfangssignale zur Ermittlung von Distanzmesswerten ausgewertet.

Der Sender 10 besteht aus einer Laserdiode oder einer Leuchtdiode. Die vom Sender 10 emittierten Sendelichtstrahlen 9 durchsetzen ein Austrittsfenster 14 in der Frontwand des Gehäuses 8 und gelangen so in den Überwachungsbereich. Die von dem Reflektor 7 zurückreflektierten Empfangslichtstrahlen 11 durchsetzen ebenfalls das Austrittsfenster 14 und werden dann zum Empfänger 12 geführt.

Zur Strahlformung der Sendelichtstrahlen 9 kann dem Sender 10 eine nicht dargestellte Sendeoptik nachgeordnet sein. Zur Fokussierung der Sendelichtstrahlen 9 kann dem Empfänger 12 eine ebenfalls nicht dargestellte Empfangsoptik vorgeordnet sein.

Die mit dem Distanzsensor 2 durchgeführte Entfernungsmessung erfolgt nach dem Laufzeitverfahren. In dem Gehäuse 8 des Distanzsensors 2 ist ein Strahlteilerspiegel oder dergleichen angeordnet, mit welchem eine koaxiale Strahlführung der Sendelichtstrahlen 9 und der Empfangslichtstrahlen 11 im Überwachungsbereich erreicht wird. Der Empfänger 12 besteht dabei aus einer Photodiode oder dergleichen.

Die Laufzeitmessung kann einerseits nach dem Phasenmessprinzip erfolgen. In diesem Fall wird den Sendelichtstrahlen 9 eine Amplitudenmodulation aufgeprägt. Die Bestimmung von Objektdistanzen erfolgt dann aus der Bestimmung der Phasendifferenz der vom Sender 10 emittierten Sendelichtstrahlen 9 und der auf den Empfänger 12 auftreffenden Empfangslichtstrahlen 11. Alternativ kann die Entfernungsmessung nach der Impulslaufzeitmethode erfolgen. In diesem Fall emittiert der Sender 10 Sendelichtstrahlen 9 in Form von kurzen Sendelichtimpulsen. In der Auswerteeinheit 13 wird dann zur Entfernungsmessung die Laufzeit der Sendelichtimpulse zum Reflektor 7 und zurück zum Empfänger 12 ausgewertet.

Prinzipiell kann die mit dem Distanzsensor durchgeführte Entfernungsmessung auch nach dem Triangulationsverfahren erfolgen.

Die mit dem Distanzsensor 2 ermittelten Distanzmesswerte werden über einen an die Auswerteeinheit 13 angeschlossenen Analogausgang 15 ausgegeben. Zudem weist der Distanzsensor 2 einen Schaltausgang 16 zur Ausgabe eines binären Schaltsignals auf. Das Schaltsignal weist wie in Figur 3 dargestellt zwei Schaltzustände "high" und "low" auf. Zur Generierung des Schaltsignals werden die in der Auswerteeinheit 13 ermittelten Distanzmesswerte mit einem Schwellwert bewertet, welcher dem in Figur 3 aufgeführten Schaltabstand $d_0$ entspricht.

Bei Objektdistanzen die kleiner als der Schaltzustand $d_0$ sind, nimmt das Schaltsignal wie in Figur 3 dargestellt den Schaltzustand "high" ein. Bei Distanzen oberhalb des Schaltzustands $d_0$ nimmt das Schaltsignal den Schaltzustand "low" ein. Anhand der Schaltzustände des Schaltsignals kann somit überprüft werden, ob das Fahrzeug 6 in den durch den Schaltabstand $d_0$ begrenzten Entfernungsbereich von der stationären Einheit eingedrungen ist oder nicht. Dieses Schaltsignal wird vorzugsweise zu Steuerungsfunktionen des Fahrzeugs 6 oder diesem zugeordneten Funktionseinheiten verwendet. Hierzu wird dem Schaltsignal zweckmäßigerweise an eine übergeordnete Steuerung ausgegeben. Prinzipiell können in dem Distanzsensor 2 auch mehrere Schaltsignale zur Definition mehrer Entfernungsbereiche generiert werden.

An der Unterseite des Gehäuses 8 des Distanzsensors 2 befindet sich eine erste Schnittstelleneinheit 17 zum Anschluß an die Anschalteinheit 5.

Die Anschalteinheit 5 ist in einem Gehäuseaufsatz 18 integriert, dessen Oberseite mit der Unterseite des Gehäuses 8 verbunden werden kann. Beispielsweise kann der Gehäuseaufsatz 18 auf das Gehäuse 8 aufgesteckt oder aufgerastet werden.

An der Oberseite des Gehäuseaufsatzes 18 der Anschalteinheit 5 befindet sich eine zweite Schnittsteleneinheit 19, die mit der ersten Schnittstelleinheit 17 des Distanzsensors 2 bei Aufnahme des Gehäuses 8 auf den Gehäuseaufsatz 18 kontaktiert wird. Anstelle der Schnittstelleneinheiten 17, 19 können auch Kabelverbindungen oder dergleichen zur Verbindung des Distanzsensors mit der Anschalteinheit 5 vorgesehen sein. In wenigstens einer den Schnittstelleneinheiten 17, 19 ist wenigstens eine Hardware-Kennung integriert, die beispielsweise von einem Pull-up Widerstand gebildet ist. Mit dieser Hardware-Kennung kann kontrolliert werden, ob die Anschalteinheit 5 an den Distanzsensor 2 angeschlossen ist. Zur Verringerung von EMV-Störeinflüssen werden bevorzugt sichere Kommunikationsprotokolle über die von den Schnittstelleinheiten 17, 19 gebildete Schnittstellen übertragen.

In der Anschalteinheit 5 ist eine Rechnereinheit 20 integriert. Die Rechnereinheit 20 besteht aus einem Microcontroller, in welchem als Speichereinheit ein nicht flüchtiger Speicher, beispielsweise ein EEPROM integriert ist.

Die Anschalteinheit 5 weist weiterhin einen Temperatursensor 21 zur Messung der Umgebungstemperatur, einen Luftdrucksensor 22 zur Messung des Umgebungsluftdrucks und einen Feuchtigkeitssensor 23 zur Messung der Umgebungsluftfeuchtigkeit auf. Die mit diesen Sensoren gemessenen Umweltparameter werden in die Rechnereinheit 20 eingelesen. Von dort werden die Umweltparameter in den angeschlossenen Distanzsensor 2 eingelesen. In der Auswerteeinheit 13 des Distanzsensors 2 werden diese Umweltparameter zur fortlaufenden Korrektur der ermittelten Distanzwerte genutzt.

Da die Distanzmessung im vorliegenden Fall nach einem Laufzeitmessverfahren erfolgt, ist die eigentliche Messgröße bei der Distanzbestimmung die Laufzeit des Lichts vom Distanzsensor 2 zum Reflektor 7 und zurück zum Distanzsensor 2. Die gemessene Laufzeit t wird in der Auswerteeinheit 13 gemäß der Beziehung

$$d = c \cdot t$$

In einen Distanzwert d umgerechnet, wobei c die Lichtgeschwindigkeit ist.

Für die Lichtgeschwindigkeit c gilt folgende Beziehung:

$$c = c_o / n.$$

Dabei ist $c_o$ die Lichtgeschwindigkeit im Vakuum und n der Brechnungsindex der Atmosphäre, durch welche die Lichtstrahlen bei der Distanzmessung geführt sind.

Der Brechnungsindex n ist eine bekannte Funktion der Temperatur, der Luftfeuchtigkeit und des Luftdrucks der Atmosphäre. Durch Messung dieser Umweltparameter mit den in der Anschalteinheit 5 integrierten Sensoren können in der Auswerteeinheit 13 Distanzmessfehler aufgrund von Schwankungen dieser Umweltparameter, welche eine Variation des Brechnungsindex n und damit der Lichtgeschwindigkeit c bedingen, systematisch eliminiert werden.

Während des Betriebs des an der Befestigungsvorrichtung 3 montierten und an die Anschalteinheit 5 angeschlossenen Distanzsensors 2 werden von diesem Parameterwerte in die Anschalteinheit 5 eingelesen und in der Rechnereinheit 20 abgespeichert. Die Parameterwerte umfassen insbesondere applikationsspezifische Parameter, die in der Auswerteeinheit 13 hinterlegt sind. Die Auswerteeinheit 13 steuert die Schnittstelleneinheit 17, 19 des Distanzsensors 2 vorzugsweise zu vorgegebenen Zeiten an, worauf die Parameterwerte zur Anschalteinheit 5 übertragen werden.

Zu derartigen Parameterwerten zählen beispielsweise Schnittstellenparameter, welche das Datenformat von über den Distanzsensor 2 auszugebenden oder in den Distanzsensor 2 einzulesenden Daten definieren.

Weiterhin sind die Parameterwerte von Referenz-Distanzwerten gebildet, welche die Einstellungen des Distanzsensors 2 für die durchzuführenden Entfernungsmessungen definieren.

Einen derartigen Referenz-Distanzwert stellt die Nullpunktdistanz des Distanzsensor 2 dar, auf welcher die Entfernungsmessungen bezogen werden.

Die Nullpunktdistanz wird im vorliegenden Ausführungsbeispiel während eines Einlernvorganges vor Inbetriebnahme des Distanzsensors 2 bestimmt. Hierzu wird das Fahrzeug 6 solange gegenüber der stationären Einheit verfahren, bis der Reflektor 7 am Fahrzeug 6 exakt in der der Nulldistanz entsprechenden Distanz zur stationären Einheit angeordnet ist. Die Definition der Nulldistanz erfolgt beispielsweise über einen Endschalter der dann anspricht, wenn der Reflektor 7 in der der Nulldistanz liegenden Distanz angeordnet ist. Das Endschalter-Signal wird in den Distanzsensor 2 zur Generierung eines Teach-Befehls eingelesen. Sobald der Teach-Befehl im Distanzsensor 2 vorliegt, wird der dort registrierte Distanzmesswert als Nullpunktdistanz übernommen und als Referenz-Distanzwert in die Anschalteinheit 5 eingelesen.

Einen weiteren Referenz-Distanzwert bildet der Schaltabstand des Distanzsensors 2.

Fällt der Distanzsensor 2 aufgrund eines Defekts aus, so muss dieser durch einen neuen Distanzsensor 2 ersetzt werden. Der neue Distanzsensor 2 wird dabei in gleicher Weise an der Befestigungsvorrichtung 3 montiert und dabei an die Anschalteinheit 5 angeschlossen. Daraufhin werden die Parameterwerte aus der Anschalteinheit 5 in den neuen Distanzsensor 2 eingelesen. Damit stehen in diesem sämtliche applikationsspezifische Parameter zur Verfügung, so dass dieser unmittelbar für den Einsatz in der jeweiligen Applikation einsatzbereit ist.

Vorzugsweise erfolgt die Übernahme der Parameterwerte während einer Einlemphase vor Inbetriebnahme des neuen Distanzsensors 2.

Als Parameterwert wird insbesondere als Referenz-Distanzwert die Nullpunktdistanz $N_0$ des alten Distanzsensors 2 aus der Anschalteinheit 5 in den neuen Distanzsensor 2 eingelesen.

Zur Bestimmung der aktuellen Nulldistanz $N_1$ wird das Fahrzeug 6 wieder solange verfahren bis der Reflektor 7 in der der Nulldistanz entsprechenden Position liegt und der Endschalter anspricht.

Aufgrund von Montagetoleranzen bei der Befestigung des Distanzsensors 2 an der Befestigungsvorrichtung 3 und gegebenenfalls aufgrund von internen Bauteiltoleranzen stimmt die ermittelte Nulldistanz $N_1$ mit der aus der Anschalteinheit 5 eingelesenen Nulldistanz $N_0$ nicht überein.

Um derartige Störeinflüsse zu eliminieren wird in dem Distanzsensor 2 ein Offset-Wert OW gemäß folgender Beziehung gebildet:

$$OW = N_1 - N_0$$

Dieser Offset-Wert wird während der anschließenden Betriebsphase von den ermittelten Distanzmesswerten subtrahiert. Auf diese Weise sind an den so korrigierten Distanzmeßwerten die Störeinflüsse infolge von Montage- und Bauteiltoleranzen eliminiert, ohne dass hierzu eine mechanische Nachjustierung des Distanzsensors 2 an der Befestigungsvorrichtung 3 notwendig ist.

Die ermittelten Nulldistanzen $N_0$, $N_1$ für den alten und neuen Distanzsensor 2 sind durch bauteilbedingte Messfehler in den Distanzsensoren 2 generell fehlerbehaftet. Dementsprechend ist auch der aus diesen beiden Messwerten Offset-Wert OW entsprechend fehlerbehaftet.

Um derartige Fehlerquellen zu minimieren, kann die Bestimmung des Offset-Werts OW dahingehend abgeändert werden, dass nicht nur eine Nulldistanz, sondern eine Vielzahl von Referenzdistanzen zur Bestimmung des Offset-Werts OW herangezogen wird. Damit werden für den alten Distanzsensor 2 eine Anzahl von K Referenzdistanzen $N_0^k$ (k = 1,... K) und entsprechend für den neuen Distanzsensor 2 eine entsprechende Anzahl von K Referenzdistanzen $N_1^k$ (k = 1,... K) ermittelt. Dann bestimmt sich der Offset-Wert OW allgemein gemäß der Beziehung

$$OW = f(N_1^k - N_0^k),$$

wobei $f(N_1^k - N_0^k)$ eine Funktion der Differenzen $N_1^k - N_0^k$ (k = 1,.... K) ist. Dabei kann die Bestimmung des Offset-Werts beispielsweise durch die Methode der kleinsten quadratischen Abweichungen für die ermittelten Referenzdistanzen erfolgen.

Bezugszeichenliste

(1) Vorrichtung
(2) Distanzsensor
(3) Befestigungsvorrichtung
(4) Stationäre Einheit
(5) Anschalteinheit
(6) Fahrzeug
(7) Reflektor
(8) Gehäuse
(9) Sendelichtstrahlen
(10) Sender

(11)   Empfangslichtstrahlen
(12)   Empfänger
(13)   Auswerteeinheit
(14)   Austrittsfenster
(15)   Analogausgang
(16)   Schaltausgang
(17)   Erste Schnittstelleneinheit
(18)   Gehäuseaufsatz
(19)   Zweite Schnittstelleneinheit
(20)   Rechnereinheit
(21)   Temperatursensor
(22)   Luftdrucksensor
(23)   Feuchtigkeitssensor

## Patentansprüche

1.  Vorrichtung zur Bestimmung von Distanzen von Objekten innerhalb eines Überwachungsbereichs, mit einem Distanzsensor und einer an diesen anschließbaren Anschalteinheit, wobei die Anschalteinheit Mittel zur Bestimmung und / oder Speicherung von Parameterwerten aufweist, welche in den angeschlossenen Distanzsensor zu dessen Betrieb einlesbar sind.

2.  Vorrichtung nach Anspruch 1, **dadurch gekennzeichnet, dass** der Distanzsensor eine Rechnereinheit mit einer integrierten Speichereinheit aufweist, in welcher Parameterwerte eines Distanzsensors abgespeichert sind, und dass bei Austausch des Distanzsensors durch einen neuen Distanzsensor die Parameterwerte aus der Anschalteinheit in den neuen Distanzsensor übertragen werden.

3.  Vorrichtung nach einem der Ansprüche 1 oder 2, **dadurch gekennzeichnet, dass** die Anschalteinheit Sensoren zur Bestimmung von Umweltparametem aufweist.

4.  Vorrichtung nach Anspruch 3, **dadurch gekennzeichnet, dass** die Anschalteinheit einen Temperatursensor, einen Luftdrucksensor und einen Feuchtigkeitssensor aufweist.

5.  Vorrichtung nach einem der Ansprüche 3 oder 4, **dadurch gekennzeichnet, dass** die in der Anschalteinheit bestimmten Umweltparameter in den Distanzsensor zur Korrektur der mit diesem ermittelten Distanzmesswerte einlesbar sind.

6.  Vorrichtung nach einem der Anspruche 1 - 5, **dadurch gekennzeichnet, dass** die Anschalteinheit (5) in einer Befestigungsvorrichtung (3) integriert ist, an welcher der Distanzsensor (2) fixierbar ist.

7.  Vorrichtung nach einem der Ansprüche 1 - 6, **dadurch gekennzeichnet, dass** die Anschalteinheit (5) an den Distanzsensor (2) über eine Kabelverbindung anschließbar ist.

8.  Vorrichtung nach einem der Ansprüche 1 - 7, **dadurch gekennzeichnet, dass** der Distanzsensor (2) in einem Gehäuse (8) integriert ist, welches auf die Anschalteinheit (5) aufsetzbar ist.

9.  Vorrichtung nach Anspruch 8, **dadurch gekennzeichnet, dass** die Anschalteinheit (5) in einem Gehäuseaufsatz (18) integriert ist, welcher an dem Gehäuse (8) des Distanzsensors (2) fixierbar ist.

10.  Vorrichtung nach Anspruch 9, **dadurch gekennzeichnet, dass** an dem Gehäuse (8) des Distanzsensors (2) eine erste Schnittstelleneinheit (17) vorgesehen ist, welche bei an der Anschalteinheit (5) fixiertem Distanzsensor (2) an eine zweite Schnittstelleneinheit (19) am Gehäuseaufsatz (18) angeschlossen ist.

11.  Vorrichtung nach Anspruch 10, **dadurch gekennzeichnet, dass** wenigstens in einer Schnittstelleneinheit (17, 19) eine Hardware-Kennung integriert ist, mittels der überprüfbar ist, ob die Anschalteinheit (5) an den Distanzsensor (2) angeschlossen ist.

12.  Vorrichtung nach einem der Ansprüche 1 - 11, **dadurch gekennzeichnet, dass** mit dem Distanzsensor (2) Entfernungsmessungen nach einem Laufzeitverfahren oder einem Phasenmessverfahren durchgeführt werden.

13.  Vorrichtung nach einem der Ansprüche 1 - 11, **dadurch gekennzeichnet, dass** mit dem Distanzsensor (2) Entfernungsmessungen nach dem Triangulationsprinzip durchgeführt werden.

14.  Vorrichtung nach einem der Ansprüche 1 - 13, **dadurch gekennzeichnet, dass** der Distanzsensor (2) einen Sendelichtstrahlen (9) emittierenden Sender (10), einen Empfangslichtstrahlen (11) empfangenden Empfänger (12) und eine Auswerteeinheit (13) aufweist, wobei in der Auswerteeinheit (13) die Empfangssignale am Ausgang des Empfängers (12) zur Generierung von Distanzmesswerten ausgewertet werden.

15.  Vorrichtung nach Anspruch 14, **dadurch gekennzeichnet, dass** an die Auswerteeinheit (13) ein Analogausgang (15) zur Ausgabe von Distanzmesswerten angeschlossen ist.

16.  Vorrichtung nach einem der Ansprüche 14 oder 15, **dadurch gekennzeichnet, dass** an die Auswerteeinheit (13) wenigstens ein Schaltausgang (16) angeschlossen ist, über welchen ein binäres Schaltsignal ausgebbar ist.

17. Vorrichtung nach Anspruch 16, **dadurch gekennzeichnet, dass** zur Generierung des binären Schaltsignals die in der Auswerteeinheit (13) ermittelten Distanzmesswerte mit einem einem Schaltabstand entsprechenden Schwellwert bewertet werden.

18. Vorrichtung nach einem der Ansprüche 1 - 17, **dadurch gekennzeichnet, dass** die in der Anschalteinheit (5) abgespeicherten Parameterwerte von Schnittstellen-Parametern gebildet sind.

19. Vorrichtung nach einem der Ansprüche 1 - 18, **dadurch gekennzeichnet, dass** die in der Anschalteinheit (5) abgespeicherten Parameterwerte von Referenz-Distanzwerten gebildet sind.

20. Vorrichtung nach Anspruch 19, **dadurch gekennzeichnet, dass** die in der Anschalteinheit (5) abgespeicherten Parameterwerte von Schwellwerten definierenden Schaltabständen oder von Nullpunktdistanzen gebildet sind.

21. Vorrichtung nach einem der Ansprüche 18 - 20, **dadurch gekennzeichnet, dass** die in der Anschalteinheit (5) abgespeicherten Parameter während einer Einlernphase vor Inbetriebnahme des an die Anschalteinheit (5) angeschlossenen Distanzsensors (2) eingelesen werden.

22. Vorrichtung nach Anspruch 21, **dadurch gekennzeichnet, dass** während der Einlernphase Referenz-Messungen zur Ermittlung von Referenz-Distanzmesswerten durchgeführt werden, wobei zur Bestimmung von Offset-Werten für den Betrieb des Distanzsensors (2) die ermittelten Referenz-Distanzmesswerte mit den aus der Anschalteinheit (5) eingelesenen Referenz-Distanzwerten verglichen werden.

# Fig. 1

**Fig. 2**

**Fig. 3**